# EUROPEAN PATENT APPLICATION

(11) **EP 2 523 122 A1**
(43) Date of publication of application: **14.11.2012**
(21) Application number: 10857159.7
(22) Date of filing: 04.11.2010
(51) Int. Cl.: G06F 17/30

(54) **METHOD FOR MARKING ELECTRONIC BOOK AND MOBILE TERMINAL**

(30) Priority: 15.09.2010 CN 201010283604
(71) Applicant: ZTE Corporation, Shenzhen, Guangdong 518057 (CN)
(72) Inventor: MA, Meizhen, Shenzhen Guangdong 518057 (CN)
(74) Representative: Jansen, Cornelis Marinus
(86) International application number: PCT/CN2010/078406
(87) International publication number: WO 2012/034303

(57) **Abstract**

The disclosure provides a method for making a mark in an electronic book and a mobile terminal. In the method, coordinates of a starting point and an ending point that a user has intended to mark are obtained; the coordinates of the starting point and the ending point are transformed to a starting character offset and an ending character offset respectively; characters from a character corresponding to the starting character offset to a character corresponding to the ending character offset are marked in a preset marking manner, the marks are displayed, and the starting character offset and the ending character offset are stored. The method for making a mark in an electronic book and the mobile terminal provided by the disclosure implement the marking function of an electronic book by obtaining and storing a starting character offset and an ending character offset, thereby meeting the marking requirement of a user in using an electronic book and improving the user's experience of usage. Moreover, the disclosure is simple to design and easy to implement.

## Description

### TECHNICAL FIELD

The disclosure relates to the technical field of an electronic book, and in particular to a method for making a mark in an electronic book and a mobile terminal.

### BACKGROUND

With the development of the Internet, electronic books have been widely used; with the development of mobile communication, mobile terminals are popularized around the world. Thus, it has become a tendency for a mobile terminal to support the function of electronic book reading.

At present, the supporting of the electronic book by the mobile terminal is only limited to display of the content of the electronic book in a screen, and some mobile terminals have a function of adding a book mark. Usually, when people read a traditional paper book, they are used to delineating their favorite sentence and paragraph by a pen; while reading an electronic book, they also wish to delineate their favorite sentence and the paragraph. However, at present, such a marking function has not been implemented in the mobile terminal, which affects the user's experience of usage.

### SUMMARY

In view of the above, the main object of the disclosure is to provide a method for making a mark in an electronic book and a mobile terminal, which can implement the marking function of an electronic book and thus improve the user's experience of usage.

In order to achieve the object above, the technical scheme of the disclosure is implemented as follows.

A method for making a mark in an electronic book, comprising the steps of:
obtaining coordinates of a starting point and an ending point that a user has intended to mark;
transforming the coordinates of the starting point and the ending point to a starting character offset and an ending character offset respectively;
marking characters from a character corresponding to the starting character offset to a character corresponding to the ending character offset in a preset marking manner, displaying the marks, and storing the starting character offset and the ending character offset.
the method may further comprise: before obtaining the coordinates of the starting point and the ending point that the user has intended to mark,
establishing a coordinate system of a display screen based on a resolution of the display screen.

Further, The obtaining coordinates of the starting point and the ending point that the user has intended to mark comprises:
receiving the starting point and the ending point input by the user; and obtaining coordinates of the starting point and the ending point that the user has intended to mark, according to correspondences between the starting point/the ending point and pixels in the display screen, and the coordinate system.

The receiving the starting point and the ending point input by the user comprises: receiving screen touching signals input by the user through touching the screen at a starting position and an ending position that are intended to mark, to obtain the starting point and ending point; or taking a position in which a cursor is located right now is as the starting point or the ending point, in response to reception of mark confirmation information input by the user.

Further, the transforming the coordinates of the starting point and the ending point to the starting character offset and the ending character offset comprises:
obtaining a number of characters displayed in each screen, according to a height of an area in the display screen for displaying texts and a height of each character; obtaining a number of characters displayed in each row, according to a width of the area for displaying texts and a width of each character;
transforming the coordinates of the starting point and the ending point, determining the position of the starting character corresponding to the coordinate of the starting point and the position of the ending character corresponding to the coordinate of the ending point; and
obtaining offsets of the starting character and the ending character from the starting position of the electronic book respectively, according to the positions of the starting character and the ending character and an offset of a first character on a page on which the starting character and the ending character are located from the starting position of the electronic book.

A mobile terminal includes a coordinate obtaining unit, an offset calculation unit, a marking unit and a storage unit, in which
the coordinate obtaining unit is configured to obtain coordinates of a starting point and an ending point that are determined and marked by a user;
the offset calculation unit is configured to transform the coordinates obtained by the coordinate obtaining unit to a starting character offset and an ending character offset;
the marking unit is configured to mark characters from a character corresponding to a starting character offset to a character corresponding to an ending character offset in a preset marking manner, and to display the marks; and
the storage unit is configured to store the starting character offset and the ending character offset obtained by the offset calculation unit.

Further, the mobile terminal may further comprise a coordinate system establishment unit configured to establish a coordinate system based on a resolution of a display screen, .

Further, the coordinate obtaining unit may be specifically configured to receive the starting point and the ending point input by the user; and to obtain coordinates of the starting point and the ending point that the user has intended to mark, according to correspondences between the starting point/the ending point and pixels in the display screen, and the coordinate system established by the coordinate system establishment system.

Further, when the mobile terminal is a touch mobile terminal, the coordinate obtaining unit may be specifically configured to receive screen touching signals input by the user at a starting position and an ending position that are intended to mark, so as to obtain the starting point and the ending point; and
the mobile terminal may further comprise a confirmation unit configured to trigger the coordinate obtaining unit to take a position in which a cursor is located right now as the starting point or the ending point, in response to reception of marking confirmation information input by the user.

Further, the offset calculation unit may be specifically configured to obtain a number of characters displayed in each screen, according to a height of an area in the display screen for displaying texts and a height of each character; to obtain a number of characters displayed in each row, according to a width of the area for displaying texts and a width of each character; to transform the coordinates of the starting point and the ending point, to determine the position of the starting character corresponding to the coordinate of the starting point and the position of the ending character corresponding to the coordinate of the ending point; and to obtain offsets of the starting character and the ending character from the starting position of the electronic book respectively, according to the positions of the starting character and the ending character and an offset of a first character on a page on which the starting character and the ending character are located from the starting position of the electronic book.

The method for making a mark in an electronic book and the mobile terminal provided by the disclosure implement the marking function of an electronic book by obtaining and storing a starting character offset and an ending character offset, thereby meeting the marking requirement of a user in using an electronic book and improving the user's experience of usage. Moreover, the disclosure is simple to design and easy to implement.

### BRIEF DESCRIPTION OF THE DRAWINGS

Fig. 1 shows a flowchart of implementing a method for making a mark in an electronic book according to the disclosure;
Fig. 2a shows a vertical coordinate schematic view of a display screen of an electronic book according to the disclosure;
Fig. 2b shows a horizontal coordinate schematic view of a display screen of an electronic book according to the disclosure;
Fig. 3 shows a coordinate transformation diagram of a starting point or an ending point according to the disclosure;
Fig. 4 shows a schematic view of a character display boundary of an electronic book and a text underline mark;
Fig. 5 shows a schematic view of the display of a Chinese character " 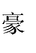 (hao)" and a dot matrix of pixels thereof;
Fig. 6 shows a flowchart of implementing a method for making a mark in an electronic book according to Embodiment 1 of the disclosure;
Fig. 7 shows a flowchart of implementing a method for making a mark in an electronic book according to Embodiment 2 of the disclosure;
Fig. 8 shows a structure diagram of a mobile terminal according to the disclosure.

### DETAILED DESCRIPTION

The basic concept of the disclosure lies in that, coordinates of a starting point and an ending point that a user has intended to mark are obtained; the coordinates of the starting point and the ending point are transformed to a starting character offset and an ending character offset respectively; characters from a character corresponding to the starting character offset to a character corresponding to the ending character offset are marked in a preset marking manner, the marks are displayed, and the starting character offset and the ending character offset are stored.

For better understanding the purpose, technical scheme and advantages of the disclosure, embodiments are provided hereinafter to illustrate this disclosure in detail with reference to the accompanying drawings.

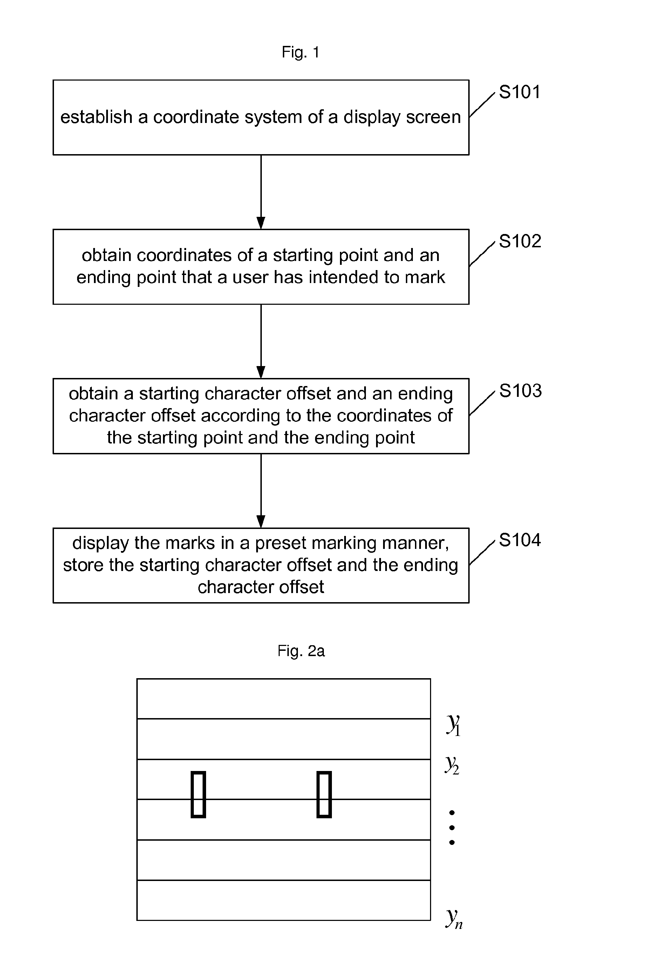

Fig. 1 shows a flowchart of implementing a method for making a mark in an electronic book according to the disclosure. As shown in Fig. 1, the method includes the following steps:
step S101: a coordinate system is established for a display screen which displays an electronic book, according to the resolution of the display screen.

Specifically, the resolution of a display screen is generally represented by pixels. One of the four corners of the display screen can be taken as an origin, the horizontal side is taken as the x-axis and the vertical side is taken as the y-axis. For example, a liquid crystal display (LCD) may have a size of 160x128 pixels. Provided the lower left corner of the display screen is the origin, the coordinates of the pixel at the lower left corner are the origin coordinates (0, 0), the coordinates of the pixel at the upper right corner are (160, 128).

step S102: coordinates of a starting point and an ending point that a user intends to mark are obtained.

In this step, the starting point and the ending point of the contents to be marked are received from the user, and coordinates of the starting point and the ending point are determined according to the currently established coordinate system of the display screen and the correspondence between the starting point/the ending point and the pixels in the display screen. In the disclosure, each point the user desires to mark corresponds to a pixel in the display screen.

step S103: a coordinate transformation is performed based on the coordinates of the starting point and the ending point, to obtain a starting character offset and an ending character offset.

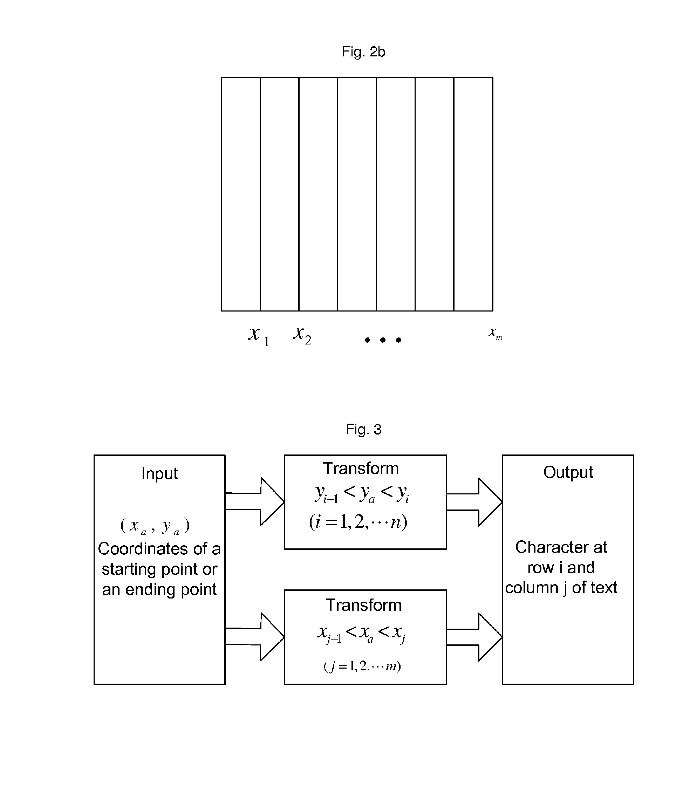

In this step, according to the height of an area in the display screen for displaying texts and the height of a character, the row number of characters displayed per screen may be calculated, so that a range (y₁, y₂,···y*ₙ*) of the vertical coordinates of each row of characters may be obtained, as shown in Fig. 2a. Similarly, according to the width of the area in the display screen for displaying texts and the width of a character, the number of characters that may be displayed in each row may be calculated, so that a range *(*y₁, y₂,···y*ₘ)* of the horizontal coordinates of each character in each row may be obtained, as shown in Fig. 2b.

Coordinate transformation for the starting point or ending point may be performed, according to the range (y₁, y₂,···y*ₙ*) of the vertical coordinates of each row of characters and the range (y₁, y₂,···y*ₘ*) of the horizontal coordinates of each character in each row, as shown in Fig. 3. Referring to Fig. 3, a row transformation is performed on the coordinates of the starting point or ending point by using *yᵢ₋₁ < yₐ < yᵢ* (*i =* 1,2,*···n*) *and xⱼ₋₁ < xₐ < xⱼ* (*j* = 1,2,···*m*)*,* to obtain the position of the starting character corresponding to the starting point and the position of the ending character corresponding to the ending point, that is, the row number (i) and column number (j) for each of the starting character and ending character in this page.

The electronic book is displayed per screen, and one screen corresponds to one page of the electronic book. The principle for implementing an electronic book may be explained as follows. The first character on each page and the offset of the first character from the starting position of the electronic book would be stored in a corresponding file or memory. In this way, the functions of page turning and jumping of the electronic book can be performed conveniently, wherein the offset of the character from the starting position of the electronic book refers to what number this character is among the characters in the electronic book.

According to the obtained page number, row number and column number of each of the starting character and the ending character in the electronic book respectively, and the offset of the first character on each page from the starting position of the electronic book (that is, what number the first character on this page is among the characters in the electronic book), the offset of each of the starting character and the ending character from the starting position of the electronic book may be obtained (that is, what numbers the starting character and the ending character are among the characters in the electronic book respectively).

step S104: The characters are marked from one corresponding to the starting character offset to one corresponding to the ending character offset in a preset marking manner, the marks are displayed, and the starting character offset and the ending character offset are saved.

In this step, the preset marking manner may include the manners of text underlining, text highlight display, font bolding, font color changing, etc. The user may select a marking manner as he/she prefers. The starting character offset and the ending character offset may be stored in pair, so that the marks may be displayed when the electronic book is re-opened later.

Here, after the starting character offset and the ending character offset are stored, when the electronic book is re-opened, the marked-up content may be displayed in a marking manner selected by the current user. For example, if the current user selects the marking manner of text underlining, then after the starting character offset and the ending character offset are stored, when the electronic book is re-opened, an underline would appear in the corresponding texts from the starting character to the ending character. Also, when the starting character offset and the ending character offset are stored, the corresponding marking method may be stored. In this case, the marked-up content is displayed in the marking manner stored along with the starting character offset and the ending character offset. For example, two pairs of starting character offsets and ending character offsets are stored, the first pair of starting character offset and ending character offset and the set marking manner of text underlining are stored together, the second pair of starting character offset and ending character offset and the set font color changing marking method are stored together, then when the electronic book is re-opened, an underline appears in the corresponding text from the starting character to the ending character of the first pair, and the texts from the starting character to the ending character of the second pair are displayed in a discolored font;

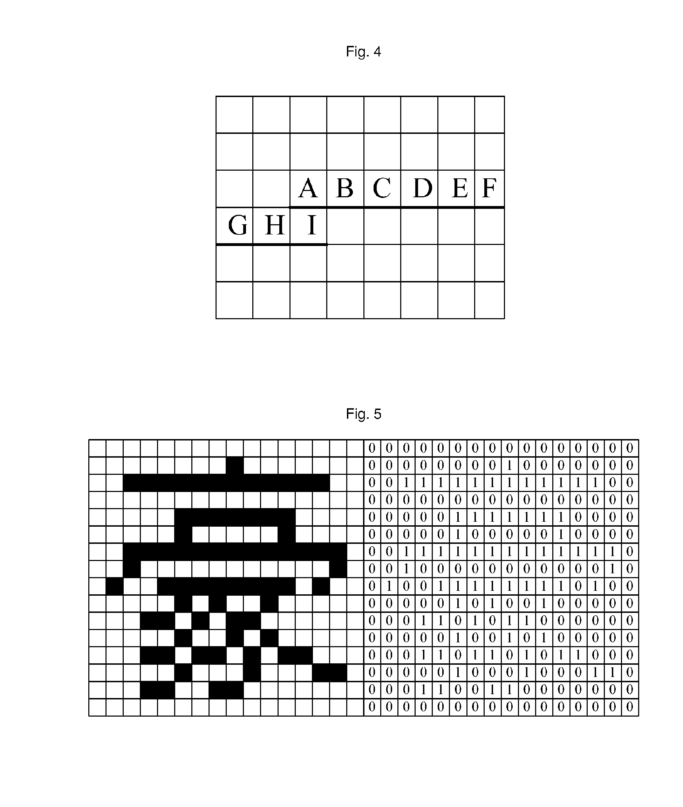

Each character in the electronic book is displayed by using a word stock; specifically, each of the characters is drawn by a dot matrix of binary pixels 0 and 1, each character has its own display range, referring to Fig. 4 for details. In Fig. 4, a small rectangle represents the display range of a character, that is, the size of the dot matrix of pixels of each character; wherein A, B, C, D, etc. represent characters. Fig. 5 shows a diagram of Chinese character " 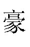 (hao)" and a 16x16 dot matrix of pixels for the Chinese character.

When the marking manner of text underlining is adopted, according to the range of the character dot matrix, all pixels in the boundary line of a dot matrix below the character to be marked are displayed in an underline color pre-selected by the user. In this way, in the display screen, an underline would appear below the character that the user wants to mark, referring to Fig. 4, in which A to I are characters the user desires to mark. For other marking manners, their implementation principles are similar to that of the text underlining, and the description will be omitted here.

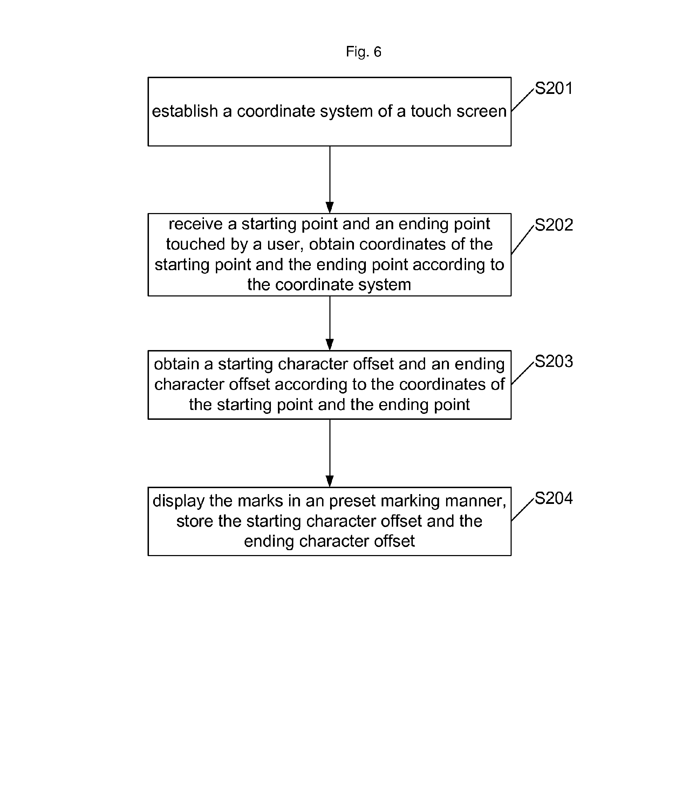

Fig. 6 shows a flowchart of implementing a method for making a mark in an electronic book according to Embodiment 1 of the disclosure. It is to be noted that in embodiment 1, the display screen for the electronic book is a touch screen. As shown in Fig. 6, embodiment 1 includes the following steps:
Step S201: a coordinate system is established for a touch screen for displaying the electronic book, according to the resolution of the touch screen.

Specifically, the resolution of the touch screen is represented by pixels. One of the four corners of the touch screen can be taken as an origin, the horizontal side is taken as the x-axis and the vertical side is taken as the y-axis. For example, the LCD has a screen of 160x128 pixels. Provided the lower left corner of the touch screen is the origin, the coordinates of the pixel at the lower left corner are the origin coordinates (0, 0), the coordinates of the pixel at the upper right corner are (160, 128).

Step S202: coordinates of a starting point and an ending point that a user intends to mark are obtained.

In this step, screen touching signals input by the user through touching the screen are received at the starting position and ending position that are intended to mark, to obtain the starting point and ending point input by the user; and coordinates of the starting point and the ending point are determined according to the currently established coordinate system of the touch screen and the correspondence between the starting point/the ending point and the pixels in the touch screen.

Step S203: a coordinate transformation is performed based on the coordinates of the starting point and the ending point, to obtain a starting character offset and an ending character offset.

In this step, according to the height of an area in the touch screen for displaying texts and the height of a character, the row number of characters displayed per screen may be calculated, so that a range (*y*₁, *y*₂,···*yₙ*) of the vertical coordinates of each row of characters may be obtained, as shown in Fig. 2a. Similarly, according to the width of the area in the touch screen for displaying texts and the width of a character, the number of characters that may be displayed in each row may be calculated, so that a range (y₁, y₂,···y*ₘ*) of the horizontal coordinates of each character in each row may be obtained, as shown in Fig. 2b.

Coordinate transformation for the starting point or ending point may be performed, according to the range (y₁, y₂,···y*ₙ*) of the vertical coordinates of each row of characters and the range (y₁, y₂,···y*ₘ*) of the horizontal coordinates of each character in each row, as shown in Fig. 3. A row transformation is performed on the coordinates of the starting point or ending point by using *yᵢ₋₁ < yₐ < yᵢ* (*i =* 1,2,*···n*) and *x*_{*j*-1} < *xₐ* < x*ⱼ* (*j* = 1,2,*···m*), to obtain the position of the starting character corresponding to the starting point and the position of the ending character corresponding to the ending point, that is, the row number (i) and column number (j) for each of the starting character and ending character in this page. For example, assuming that the coordinates of the original point is (*xₐ, yₐ*)*,* y₂ < yₐ < y₃ and *x*₇ < *xₐ* < *x*₈, the coordinates of the original point correspond to the character at the third row and eighth column.

The electronic book is displayed per screen, and one screen corresponds to one page of the electronic book. The principle for implementing an electronic book may be explained as follows. The first character on each page and the offset of the first character from the starting position of the electronic book would be stored in a corresponding file or memory. In this way, the functions of page turning and jumping of the electronic book can be performed conveniently, wherein the offset of the character from the starting position of the electronic book refers to what number this character is among the characters in the electronic book.

According to the obtained page number, row number and column number of each of the starting character and the ending character in the electronic book respectively, and the offset of the first character on each page from the starting position of the electronic book (that is, what number the first character on this page is among the characters in the electronic book), the offset of each of the starting character and the ending character from the starting position of the electronic book may be obtained (that is, what numbers the starting character and the ending character are among the characters in the electronic book respectively).

Step S204: The characters are marked from one corresponding to the starting character offset to one corresponding to the ending character offset in a preset marking manner, the marks are displayed, and the starting character offset and the ending character offset are saved.

In this step, the preset marking manner may include the manners of text underlining, text highlight display, font bolding, font color changing, etc. The user may select a marking manner as he/she prefers. The starting character offset and the ending character offset may be stored in pair, so that the marks may be displayed when the electronic book is re-opened later.

Here, after the starting character offset and the ending character offset are stored, when the electronic book is re-opened, the marked-up content may be displayed in a marking manner selected by the current user. Also, when the starting character offset and the ending character offset are stored, the corresponding marking method may be stored. In this case, the marked-up content is displayed in the marking manner stored along with the starting character offset and the ending character offset.

Each character in the electronic book is displayed by using a word stock; specifically, each of the characters is drawn by a dot matrix of binary pixels 0 and 1, each character has its own display range, referring to Fig. 4 for details. In Fig. 4, a small rectangle represents the display range of a character, that is, the size of the dot matrix of pixels of each character; wherein A, B, C, D, etc. represent characters. Fig. 5 shows a diagram of Chinese character " 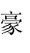 (hao)" and a 16x16 dot matrix of pixels for the Chinese character.

When the marking manner of text underlining is adopted, according to the range of the character dot matrix, all pixels in the boundary line of a dot matrix below the character to be marked are displayed in an underline color pre-selected by the user. In this way, in the display screen, an underline would appear below the character that the user wants to mark, referring to Fig. 4, in which A to I are characters the user desires to mark. For other marking manners, their implementation principles are similar to that of the text underlining, and the description will be omitted here.

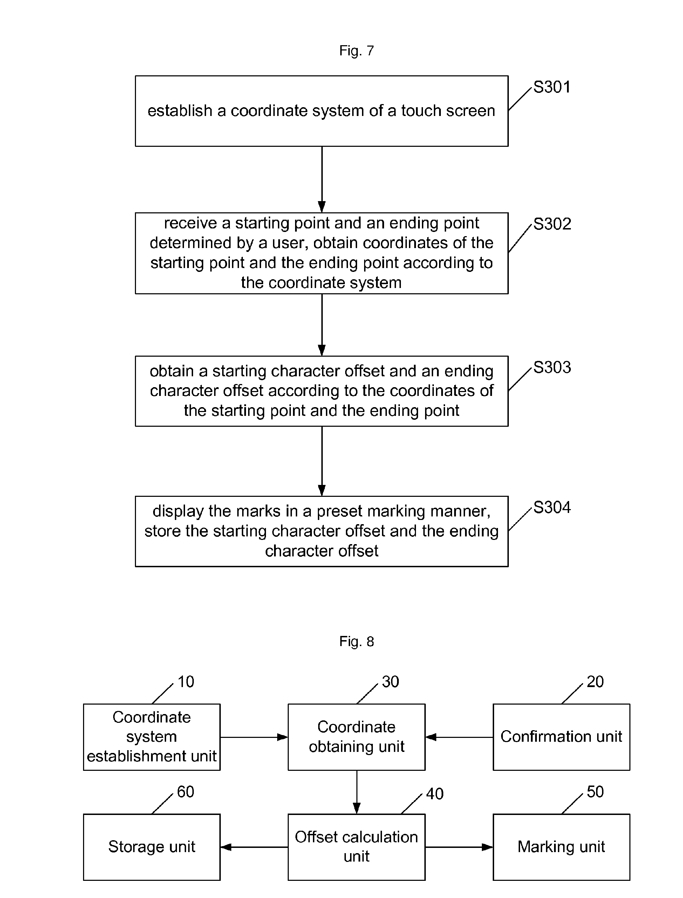

Fig. 7 shows a flowchart of implementing a method for making a mark in an electronic book according to Embodiment 2 of the disclosure. It should be noted that in embodiment 1, the starting point and the ending point are determined from screen touching signals input by the user through touching the screen, while in this embodiment, the starting point and the ending point are determined by mark confirmation information input by the user. Specifically, as shown in Fig. 7, embodiment 2 includes the following steps:
Step S301: a coordinate system is established for a display screen which displays an electronic book, according to the resolution of the display screen.

Specifically, the resolution of a display screen is represented by pixels. One of the four corners of the display screen can be taken as an origin, the horizontal side is taken as the x-axis and the vertical side is taken as the y-axis. For example, the LCD has a screen of 160x128 pixels. Provided the lower left corner of the display screen is the origin, the coordinates of the pixel at the lower left corner are the origin coordinates (0, 0), the coordinates of the pixel at the upper right corner are (160, 128).

Step S302: coordinates of a starting point and an ending point that a user intends to mark are obtained.

In this step, when the mark confirmation information input by the user is received, the position in which the cursor is located right now is taken as the starting point or the ending point, wherein the user can move the cursor to the starting point or the ending point through the direction keys Up, Down, Left, Right. Then the mark confirmation information is input by means of the marking function added into the menu items in the electronic book in advance or a certain button which has been pre-arranged to perform the marking confirmation function. and coordinates of the starting point and the ending point are determined according to the established coordinate system of the display screen and the correspondence between the starting point/the ending point and the pixels in the display screen.

Step S303: a coordinate transformation is performed based on the coordinates of the starting point and the ending point, to obtain a starting character offset and an ending character offset.

In this step, according to the height of an area in the display screen for displaying texts and the height of a character, the row number of characters displayed per screen may be calculated, so that a range (*y*₁, *y*₂,···*yₙ*) of the vertical coordinates of each row of characters may be obtained, as shown in Fig. 2a. Similarly, according to the width of the area in the display screen for displaying texts and the width of a character, the number of characters that may be displayed in each row may be calculated, so that a range (y₁, y₂,···y*ₘ*) of the horizontal coordinates of each character in each row may be obtained, as shown in Fig. 2b.

Coordinate transformation for the starting point or ending point may be performed, according to the range (y₁, y₂,···y*ₙ*) of the vertical coordinates of each row of characters and the range (y₁, y₂,···y*ₘ*) of the horizontal coordinates of each character in each row, as shown in Fig. 3. A row transformation is performed on the coordinates of the starting point or ending point by using yᵢ₋₁ < yₐ < yᵢ (*i =* 1,2,···*n*) *and xⱼ₋₁ < xₐ < xⱼ* (*j =* 1,2,*···m*)*,* to obtain the position of the starting character corresponding to the starting point and the position of the ending character corresponding to the ending point, that is, the row number (i) and column number (j) for each of the starting character and ending character in this page. For example, assuming that the coordinates of the original point is (*xₐ, yₐ*)*,* y₂ < yₐ < y₃ and *x₇ < xₐ* < x₈, the coordinates of the original point correspond to the character at the third row and eighth column.

The electronic book is displayed per screen, and one screen corresponds to one page of the electronic book. The principle for implementing an electronic book may be explained as follows. The first character on each page and the offset of the first character from the starting position of the electronic book would be stored in a corresponding file or memory. In this way, the functions of page turning and jumping of the electronic book can be performed conveniently, wherein the offset of the character from the starting position of the electronic book refers to what number this character is among the characters in the electronic book.

According to the obtained page number, row number and column number of each of the starting character and the ending character in the electronic book respectively, and the offset of the first character on each page from the starting position of the electronic book (that is, what number the first character on this page is among the characters in the electronic book), the offset of each of the starting character and the ending character from the starting position of the electronic book may be obtained (that is, what numbers the starting character and the ending character are among the characters in the electronic book respectively).

Step S304: The characters are marked from one corresponding to the starting character offset to one corresponding to the ending character offset in a preset marking manner, the marks are displayed, and the starting character offset and the ending character offset are saved.

In this step, the preset marking manner may include the manners of text underlining, text highlight display, font bolding, font color changing, etc. The user may select a marking manner as he/she prefers. The starting character offset and the ending character offset may be stored in pair, so that the marks may be displayed when the electronic book is re-opened later.

Here, after the starting character offset and the ending character offset are stored, when the electronic book is re-opened, the marked-up content may be displayed in a marking manner selected by the current user. Also, when the starting character offset and the ending character offset are stored, the corresponding marking method may be stored. In this case, the marked-up content is displayed in the marking manner stored along with the starting character offset and the ending character offset.

Each character in the electronic book is displayed by using a word stock; specifically, each of the characters is drawn by a dot matrix of binary pixels 0 and 1, each character has its own display range, referring to Fig. 4 for details. In Fig. 4, a small rectangle represents the display range of a character, that is, the size of the dot matrix of pixels of each character; wherein A, B, C, D, etc. represent characters. Fig. 5 shows a diagram of Chinese character " 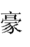 (hao)" and a 16x16 dot matrix of pixels for the Chinese character.

When the marking manner of text underlining is adopted, according to the range of the character dot matrix, all pixels in the boundary line of a dot matrix below the character to be marked are displayed in an underline color pre-selected by the user. In this way, in the display screen, an underline would appear below the character that the user wants to mark, referring to Fig. 4, in which A to I are characters the user desires to mark. For other marking manners, their implementation principles are similar to that of the text underlining, and the description will be omitted here.

Fig. 8 shows a structure diagram of a mobile terminal according to the disclosure. As shown in Fig. 8, the mobile terminal comprises a coordinate obtaining unit 30, an offset calculation unit 40, a marking unit 50 and a storage unit 60, in which,
the coordinate obtaining unit 30 is configured to obtain coordinates of a starting point and an ending point that has intended to mark; the offset calculation unit 40 is configured to transform the coordinates obtained from the coordinate obtaining unit 30 to a starting character offset and an ending character offset; the marking unit 50 is configured to mark characters from a character corresponding to the starting character offset to a character corresponding to the ending character offset in a preset marking manner, and to display the marks; the storage unit 60 is configured to store the starting character offset and the ending character offset obtained from the offset calculation unit 40.

Further, the mobile terminal further comprises a coordinate system establishment unit 10 configured to establish a coordinate system based on a resolution of a display screen,.

Further, the coordinate obtaining unit 30 is specifically configured to receive a starting point and an ending point input from the user, and to obtain coordinates of the starting point and the ending point that the user has intended to mark, according to correspondences between the starting point/the ending point and the pixels in the display screen and the coordinate system established by the coordinate system establishment unit 10.

Further, the mobile terminal may be a touch mobile terminal; and the coordinate obtaining unit 30 may specifically be configured to receive a screen touching signal input from a user at the starting position and the ending position that have been intended to mark, to obtain the starting point and the ending point.

The mobile terminal may further comprise a confirmation unit 20 configured, when receiving marking confirmation information input from a user, to trigger the coordinate obtaining unit 30 to mark the position in which the cursor is located right now as the starting point or the ending point. Here, the mark confirmation information may be input by means of the marking function added into the menu items in the electronic book in advance or a certain button which has been pre-arranged to perform the marking confirmation function.
in which, the offset calculation unit 40 is specifically configured to obtain the number of characters displayed in each screen, according to the height of an area in the display screen for displaying texts and the height of a character; to obtain the number of characters displayed in each row, according to the width of the area for displaying texts and the width of a character; to transform the coordinates of the starting point and the ending point to the position of the starting character corresponding to the coordinates of the starting point and the position of the ending character corresponding to the coordinates of the ending point; to obtain offsets of the starting character and the ending character from the starting position of the electronic book respectively, according to the positions of the starting character and the ending character and the offset of a first character on a page, on which the starting character and the ending character are located, from the starting position of the electronic book.

The above is only preferred embodiments of the disclosure and is not intended to limit the scope of the disclosure.

## Claims

1. A method for making a mark in an electronic book, comprising:
obtaining coordinates of a starting point and an ending point that a user has intended to mark;
transforming the coordinates of the starting point and the ending point to a starting character offset and an ending character offset respectively;
marking characters from a character corresponding to the starting character offset to a character corresponding to the ending character offset in a preset marking manner, displaying the marks, and storing the starting character offset and the ending character offset.

2. The method according to claim 1, further comprising: before obtaining coordinates of the starting point and the ending point that the user has intended to mark,
establishing a coordinate system of a display screen based on a resolution of the display screen.

3. The method according to claim 2, wherein the obtaining coordinates of the starting point and the ending point that the user has intended to mark comprises:
receiving the starting point and the ending point input by the user; and obtaining coordinates of the starting point and the ending point that the user has intended to mark, according to correspondences between the starting point/the ending point and pixels in the display screen, and the coordinate system.

4. The method according to claim 3, wherein the receiving the starting point and the ending point input by the user comprises: receiving screen touching signals input by the user through touching the screen at a starting position and an ending position that are intended to mark, to obtain the starting point and ending point; or taking a position in which a cursor is located right now is as the starting point or the ending point, in response to reception of mark confirmation information input by the user.

5. The method according to claim 1, wherein the transforming the coordinates of the starting point and the ending point to the starting character offset and the ending character offset comprises:
obtaining a number of characters displayed in each screen, according to a height of an area in the display screen for displaying texts and a height of each character; obtaining a number of characters displayed in each row, according to a width of the area for displaying texts and a width of each character;
transforming the coordinates of the starting point and the ending point, and determining a position of a starting character corresponding to the coordinates of the starting point and a position of an ending character corresponding to the coordinates of the ending point;
obtaining offsets of the starting character and the ending character from the starting position of the electronic book respectively, according to the positions of the starting character and the ending character and an offset of a first character on a page on which the starting character and the ending character are located from the starting position of the electronic book.

6. A mobile terminal, comprising:
a coordinate obtaining unit, configured to obtain coordinates of a starting point and an ending point that a user has intended to mark;
an offset calculation unit, configured to transform the coordinates obtained by the coordinate obtaining unit to a starting character offset and an ending character offset;
a marking unit, configured to mark characters from a character corresponding to a starting character offset to a character corresponding to an ending character offset in a preset marking manner, and to display the marks; and
a storage unit, configured to store the starting character offset and the ending character offset obtained by the offset calculation unit.

7. The mobile terminal according to claim 6, further comprising a coordinate system establishment unit configured to establish a coordinate system based on a resolution of a display screen.

8. The mobile terminal according to claim 7, wherein the coordinate obtaining unit is specifically configured to receive the starting point and the ending point input by the user; and to obtain coordinates of the starting point and the ending point that the user has intended to mark, according to correspondences between the starting point/the ending point and pixels in the display screen, and the coordinate system established by the coordinate system establishment unit.

9. The mobile terminal according to claim 8, wherein when the mobile terminal is a touch mobile terminal, the coordinate obtaining unit is specifically configured to receive screen touching signals input by the user at a starting position and an ending position that are intended to mark, so as to obtain the starting point and the ending point; and
the mobile terminal further comprises a confirmation unit configured to trigger the coordinate obtaining unit to take a position in which a cursor is located right now as the starting point or the ending point, in response to reception of mark confirmation information input by the user.

10. The mobile terminal according to claim 6, wherein the offset calculation unit is specifically configured to obtain a number of characters displayed in each screen, according to a height of an area in the display screen for displaying texts and a height of each character; to obtain a number of characters displayed in each row, according to a width of the area for displaying texts and a width of each character; to transform the coordinates of the starting point and the ending point, and to determine a position of a starting character corresponding to the coordinates of the starting point and a position of an ending character corresponding to the coordinates of the ending point; and to obtain offsets of the starting character and the ending character from the starting position of the electronic book respectively, according to the positions of the starting character and the ending character and an offset of a first character on a page on which the starting character and the ending character are located from the starting position of the electronic book.
